# EUROPEAN PATENT APPLICATION

(11) **EP 4 769 275 A1**
(43) Date of publication of application: **01.07.2026**
(21) Application number: 24895835.7
(22) Date of filing: 30.08.2024
(51) Int. Cl.: G06Q 20/40

(54) **PAYMENT PROCESSING METHOD AND APPARATUS BASED ON FACIAL RECOGNITION, AND DEVICE AND MEDIUM**

(30) Priority: 27.11.2023 CN 202311607670
(71) Applicant: TENCENT TECHNOLOGY (SHENZHEN) COMPANY LIMITED, Shenzhen, Guangdong 518057 (CN)
(72) Inventor: WANG, Shaoming, Shenzhen, Guangdong 518057 (CN)
(74) Representative: Gunzelmann, Rainer
(86) International application number: PCT/CN2024/115928
(87) International publication number: WO 2025/112734

(57) **Abstract**

The present application relates to the technical field of artificial intelligence. Provided are a payment processing method and apparatus based on facial recognition, and a device and a medium, which can be applied to scenarios such as cloud technology, artificial intelligence, intelligent traffic and aided driving. The method comprises: in response to a facial recognition payment request from a target object, acquiring image data collected by means of an image collection device and audio data corresponding to the image data; performing feature analysis on the audio data with regard to the number of objects, so as to obtain an audio analysis result; if the audio analysis result indicates that the number of objects corresponding to the audio data is one, performing facial recognition on the image data on the basis of a facial recognition model, so as to obtain target facial data of the target object; and on the basis of the target facial data, executing a payment operation corresponding to the facial recognition payment request. The present application can effectively shorten the redundant time consumed during payment recognition.

## Description

### RELATED APPLICATION

This application claims priority to Chinese Patent Application No. 202311607670.5, filed with the China National Intellectual Property Administration on November 27, 2023 and entitled "PAYMENT PROCESSING METHOD AND APPARATUS BASED ON FACIAL RECOGNITION, DEVICE, AND MEDIUM", which is incorporated herein by reference in its entirety.

### FIELD OF THE TECHNOLOGY

The present disclosure relates to the field of artificial intelligence technologies, and in particular, to a payment processing method and apparatus based on facial recognition, a device, and a medium.

### BACKGROUND OF THE DISCLOSURE

As artificial intelligence develops, intelligent recognition payment based on facial features has become a widely adopted service mode. Compared with a conventional electronic payment means, a mobile device or a physical object does not need to be carried for intelligent facial feature recognition, thereby implementing highly efficient payment. However, in an actual scenario, due to complexity of an environment, a payment terminal may collect faces of a plurality of objects at a time. Therefore, before performing recognition-based payment each time, face bounding box detection and face selection are performed by default through algorithms such as multi-person detection and an attention mechanism, to avoid object misrecognition. Although this manner can effectively improve accuracy and security of facial payment, memory-intensive algorithm modules such as multi-person detection and attention need to be loaded before each payment, which greatly increases operation time consumption, and reduces payment efficiency and degrades service experience.

### SUMMARY

The present disclosure provides a payment processing method and apparatus based on facial recognition, a device, and a medium, to significantly improve payment efficiency in a facial payment service.

According to an aspect, the present disclosure provides a payment processing method based on facial recognition, including:
obtaining, in response to a facial recognition payment request from a target object, image data collected by an image collection device and audio data corresponding to the image data;
performing feature analysis on the audio data, to obtain an audio analysis result about the number of objects;
performing facial recognition on the image data based on a facial recognition model, to obtain target facial data of the target object if the audio analysis result indicates that the number of objects corresponding to the audio data is one; and
performing a payment operation corresponding to the facial recognition payment request based on the target facial data.

According to another aspect, a payment processing apparatus based on facial recognition is provided, including:
a data obtaining module, configured to obtain, in response to a facial recognition payment request from a target object, image data collected by an image collection device and audio data corresponding to the image data;
a feature analysis module, configured to perform feature analysis on the audio data, to obtain an audio analysis result about the number of objects;
a facial recognition module, configured to perform facial recognition on the image data based on a facial recognition model, to obtain target facial data of the target object if the audio analysis result indicates that the number of objects corresponding to the audio data is one; and
a payment module, configured to perform a payment operation corresponding to the facial recognition payment request based on the target facial data.

In a possible implementation, the feature analysis module includes a sound source separation sub-module, configured to: perform sound source separation detection on the audio data to obtain sound source separation data, the sound source separation data including at least one sound source signal corresponding to the audio data;
count a total number of sound source signals included in the at least one sound source signal; and
determine that the audio analysis result is a first result if the total signal number is equal to a unit value, the first result indicating that the number of objects corresponding to the audio data is one; or
determine that the audio analysis result is a second result if the total signal number is greater than the unit value, the second result indicating that the number of objects corresponding to the audio data is more than one.

In a possible implementation, the sound source separation sub-module includes:
a framing unit, configured to perform framing on the audio data, to obtain a plurality of audio frames;
a feature extraction unit, configured to perform energy feature extraction on the plurality of audio frames, to obtain an audio energy feature; and
a sound source separation unit, configured to perform sound source separation on the audio energy feature based on a sound source separation model, to obtain the sound source separation data, the sound source separation model being obtained by performing constrained training for sound source separation on a preset first deep neural network using a sample audio energy feature as an input and using a sample sound source signal corresponding to the sample audio energy feature as an expected output, and the sample audio energy feature being obtained by performing energy feature extraction based on audio data of one sample sound source or mixed audio data corresponding to at least two sample sound sources.

In a possible implementation, the feature analysis module includes:
a noise determining sub-module, configured to determine a noise signal in the audio data;
an amplitude calculation sub-module, configured to perform noise field amplitude calculation on the noise signal to obtain noise indicator data, the noise indicator data being configured for indicating environmental noise intensity corresponding to the audio data; and
a determining module, configured to: determine that the audio analysis result is the first result if the noise indicator data indicates that the environmental noise intensity corresponding to the audio data is less than a preset intensity threshold, the first result being configured for indicating that the number of objects corresponding to the audio data is one; and
determine that the audio analysis result is the second result if the noise indicator data indicates that the environmental noise intensity corresponding to the audio data is higher than the preset intensity threshold, the second result being configured for indicating that the number of objects corresponding to the audio data is more than one.

In a possible implementation, the noise determining sub-module includes:
the framing unit, configured to perform framing on the audio data, to obtain a plurality of audio frames;
the feature extraction unit, configured to perform energy feature extraction on the plurality of audio frames, to obtain an audio energy feature; and
a noise estimation unit, configured to perform noise estimation on the audio energy feature based on a noise estimation model, to obtain the noise signal, the noise estimation model being obtained by performing constrained training for noise estimation on a preset second deep neural network using a sample audio energy feature as an input and using a sample noise signal corresponding to the sample audio energy feature as an expected output, and the sample audio energy feature being obtained by performing energy feature extraction based on audio data of one sample sound source or mixed audio data corresponding to at least two sample sound sources.

In a possible implementation, a plurality of audio collection devices arranged in an array are further disposed on a terminal, and the data obtaining module includes:
an initial audio obtaining sub-module, configured to obtain a plurality of pieces of initial audio data collected by the plurality of audio collection devices;
a sound source positioning sub-module, configured to perform sound source positioning on each piece of initial audio data, to obtain sound source position information of each piece of initial audio data; and
an audio selection sub-module, configured to determine, from the plurality of pieces of initial audio data based on the sound source position information, an audio signal whose sound source is located within a first spatial range of the terminal, to obtain the audio data, the first spatial range being located in front of a display screen of the terminal and located within a field of view of the image collection device.

In a possible implementation, the apparatus further includes:
a face detection module, configured to perform face detection on the image data based on a face detection model to obtain a plurality of facial images if the audio analysis result indicates that the number of objects corresponding to the audio data is more than one; and
a face selection module, configured to select a target facial image of the target object from the plurality of facial images,
the facial recognition module being further configured to perform facial recognition on the target facial image based on the facial recognition model, to obtain the target facial data.

In a possible implementation, the apparatus further includes:
an instruction sound source positioning module, configured to: before the in response to a facial recognition payment request from a target object, perform, in response to a facial payment voice instruction, sound source positioning on instruction audio data carried in the facial payment voice instruction, to obtain instruction sound source position information, the instruction sound source position information being configured for indicating a relative position of an object transmitting the instruction audio data relative to the image collection device; and
a payment request generation module, configured to: generate a facial recognition payment request corresponding to the facial payment voice instruction if the instruction sound source position information indicates that the object transmitting the instruction audio data is located within a second spatial range, the second spatial range being located in front of the display screen of the terminal and a distance from the display screen being within a preset distance range.

In a possible implementation, the face selection module includes:
a facial position obtaining sub-module, configured to obtain facial position information respectively corresponding to the plurality of facial images, each piece of facial position information being configured for representing a position of an object to which the corresponding facial image belongs relative to the image collection device; and
a facial image matching sub-module, configured to determine a facial image in the plurality of facial images whose facial position information matches the instruction sound source position information as the target facial image.

According to another aspect, a computer device is provided, including a processor and a memory, the memory having a computer program stored therein, and the computer program, when executed by the processor, causing the processor to perform the foregoing payment processing method based on facial recognition.

According to another aspect, a computer-readable storage medium is provided, having a computer program stored therein, the computer program including program instructions, and the program instructions, when executed by a processor, performing the foregoing payment processing method based on facial recognition.

According to another aspect, a server is provided, including a processor and a memory, the memory having a computer program stored therein, and the computer program being loaded and executed by the processor to implement the foregoing payment processing method based on facial recognition.

According to another aspect, a terminal is provided, including a processor and a memory, the memory having a computer program stored therein, and the computer program being loaded and executed by the processor to implement the foregoing payment processing method based on facial recognition.

According to another aspect, a computer program product is provided, including a computer program, the computer program being stored in a computer-readable storage medium. A processor of a computer device reads the computer program from the computer-readable storage medium, and the processor executes the computer program, so that the computer device performs the foregoing payment processing method based on facial recognition.

The payment processing method and apparatus based on facial recognition, device, storage medium, server, terminal, and computer program product according to the present disclosure have the following technical effects.

After the facial recognition payment request from the target object is received, the image data collected by the image collection device and the audio data corresponding to the image data may be obtained in response to the facial recognition payment request from the target object, and then feature analysis is performed on the audio data for the number of objects, to obtain the audio analysis result. If the audio analysis result indicates that the number of objects corresponding to the audio data is one, the face detection module does not need to be loaded, and facial recognition may be directly performed on the image data based on the facial recognition model, to obtain the target facial data of the target object, to perform the payment operation corresponding to the facial recognition payment request based on the target facial data. In this way, before the face detection module is loaded, feature analysis is first performed based on the audio data, to obtain the audio analysis result that can indicate the number of objects in front of the current terminal. When the audio analysis result indicates a scenario in which a current environment is a single object, facial recognition is directly performed without triggering loading of related memory-intensive service modules such as multi-object face detection, thereby optimizing load time consumed during facial payment, improving payment efficiency, and improving product experience.

### BRIEF DESCRIPTION OF THE DRAWINGS

FIG. 1 is a schematic diagram of an application environment according to an embodiment of the present disclosure.
FIG. 2 is a schematic flowchart of a payment processing method based on facial recognition according to an embodiment of the present disclosure.
FIG. 3 is a schematic flowchart of another payment processing method based on facial recognition according to an embodiment of the present disclosure.
FIG. 4 is a schematic flowchart of another payment processing method based on facial recognition according to an embodiment of the present disclosure.
FIG. 5 is a schematic flowchart of another payment processing method based on facial recognition according to an embodiment of the present disclosure.
FIG. 6 is a schematic framework diagram of a payment processing apparatus based on facial recognition according to an embodiment of the present disclosure.
FIG. 7 is a block diagram of a hardware structure of a computer device for performing a payment processing method based on facial recognition according to an embodiment of the present disclosure.

### DESCRIPTION OF EMBODIMENTS

Technical solutions in embodiments of the present disclosure are clearly and completely described below with reference to the accompanying drawings in the embodiments of the present disclosure. It is clear that, the described embodiments are merely some rather than all of the embodiments of the present disclosure. All other embodiments obtained by a person of ordinary skill in the art based on the embodiments of the present disclosure without creative efforts shall fall within the protection scope of the present disclosure.

In the specification, claims, and accompanying drawings of the present disclosure, terms "first", "second", and the like are intended to distinguish between similar objects, but do not necessarily indicate a specific order or sequence. Data used in this way may be interchanged in an appropriate case, so that the embodiments of the present disclosure described herein can be implemented in other orders than the order illustrated or described herein. In addition, terms "include", "have" and any other variants thereof are intended to cover a non-exclusive inclusion. For example, a process, method, system, product, or server that includes a list of steps or sub-modules is not necessarily limited to those expressly listed steps or sub-modules, but may include other steps or sub-modules not expressly listed or inherent to such a process, method, product, or device.

Before the embodiments of the present disclosure are further described in detail, the terms involved in the embodiments of the present disclosure are explained, and the terms involved in the embodiments of the present disclosure are applicable to the following explanations.

Three-dimensional (3D) camera: Compared to a conventional camera, the 3D camera incorporates liveness-related software and hardware, including a depth camera and an infrared camera, to ensure information security.

Serial number (SN): The serial number can uniquely identify an identifier (ID) of a device.

SQLite: It is a lightweight database, and is a relational database management system that complies with ACID.

Artificial Intelligence (AI) is a theory, a method, a technology, and an application system that use a digital computer or a machine controlled by the digital computer to simulate, extend, and expand human intelligence, perceive an environment, obtain knowledge, and use the knowledge to obtain an optimal result. In other words, the artificial intelligence is a comprehensive technology in computer science. This technology attempts to understand the essence of intelligence and produce a new intelligent machine that can react in a manner similar to human intelligence. The artificial intelligence is to study design principles and implementation methods of various intelligent machines, to enable the machines to have functions of perception, inference, and decision-making.

The artificial intelligence technology is a comprehensive discipline, and involves a wide range of fields including both hardware-level technologies and software-level technologies. Basic artificial intelligence technologies generally include technologies such as a sensor, a dedicated artificial intelligence chip, cloud computing, distributed storage, a big data processing technology, a pre-training model technology, an operating/interaction system, and electromechanical integration. A pre-trained model is also referred to as a large model or a basic model, which may be widely applied to downstream tasks in various fields of the artificial intelligence after being fine-tuned. The artificial intelligence software technologies mainly include several major directions such as a computer vision technology, a speech processing technology, a natural language processing technology, and machine learning/deep learning.

Machine learning (ML) is a multi-field interdiscipline that relates to a plurality of disciplines such as the probability theory, statistics, the approximation theory, convex analysis, and the algorithm complexity theory. The machine learning specializes in studying how a computer simulates or implements a human learning behavior to obtain new knowledge or skills, and reorganize an existing knowledge structure, to keep improving performance of the computer. The machine learning is a core of the artificial intelligence, and is a fundamental way to make the computer intelligent, which is applied to various fields of the artificial intelligence. The machine learning and the deep learning usually include technologies such as an artificial neural network, a belief network, reinforcement learning, transfer learning, inductive learning, and teaching learning. The pre-trained model is a latest development result of deep learning, and combines the foregoing technologies.

Deep learning: A concept of deep learning is derived from research on the artificial neural network. A multi-layer perceptron including a plurality of hidden layers is one of deep learning structures. During the deep learning, an attribute type or feature is represented by combining lower-layer features into a more abstract higher layer, to find distributed feature representation of data.

Computer vision (CV): The computer vision is a science for studying how to enable a machine to "see", and further, refers to using a camera and a computer to replace human eyes in machine vision such as recognizing, detecting, and measuring a target, and further perform graphics processing, so that an image that is more suitable for the human eyes to observe, or an image transmitted to an instrument for detection is obtained through processing by the computer. As a scientific discipline, the computer vision studies related theories and technologies, and attempts to establish an artificial intelligence system that can obtain information from images or multidimensional data. Large model technologies bring an important change to development of computer vision technologies. The pre-trained model in the vision fields such as swin-transformers, vision transformer (ViT), vision-mixture of experts (V-MOE), and masked autoencoder (MAE) may be quickly and widely applied to specific downstream tasks after being fine-tuned. The computer vision generally includes technologies such as image processing, image recognition, image semantic understanding, image retrieval, optical character recognition (OCR), video processing, video semantic understanding, video content/behavior recognition, three-dimensional (3D) object reconstruction, 3D technologies, virtual reality, augmented reality, synchronous positioning, and map building, and further includes common biometric recognition technologies such as facial recognition and fingerprint recognition.

With research and advancement of the artificial intelligence technology, the artificial intelligence technology is researched and applied in a plurality of fields, such as common smart home, smart wearing devices, virtual assistants, smart speakers, smart marketing, unmanned driving, autonomous driving, drones, digital twins, virtual humans, robots, artificial intelligence-generated content (AIGC), conversational interaction, smart medicine, smart customer services, game AI. It is believed that as the technology develops, the artificial intelligence technology will be applied in more fields, and play an increasingly important role.

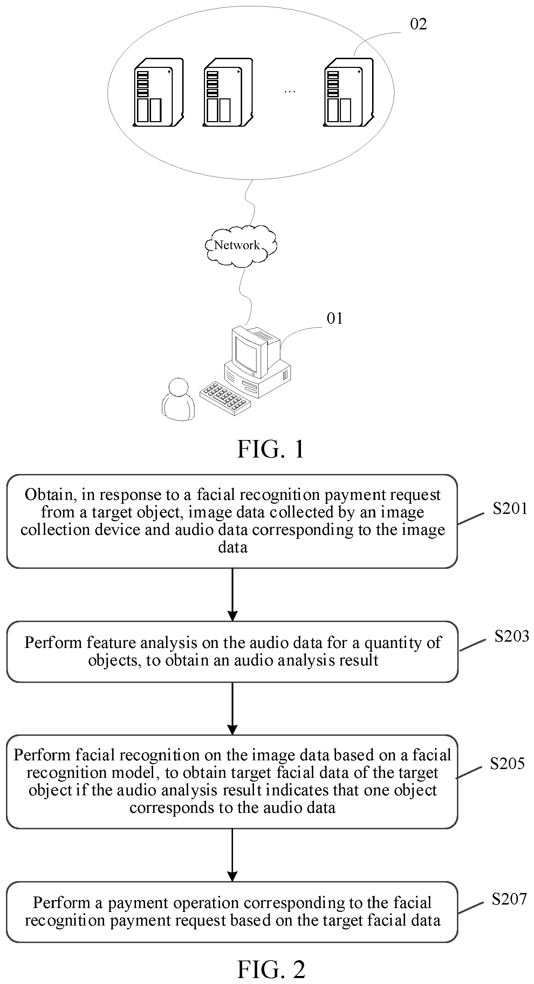

Refer to FIG. 1. FIG. 1 is a schematic diagram of an application environment according to an embodiment of the present disclosure. As shown in FIG. 1, the application environment may include at least a terminal 01 and a server 02. During actual application, the terminal 01 and the server 02 may be directly or indirectly connected in a wired or wireless communication manner. This is not limited in the present disclosure herein.

The server 02 in this embodiment of the present disclosure may be an independent physical server, or may be a server cluster or a distributed system including a plurality of physical servers, or may be a cloud server providing basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform.

Specifically, a cloud technology is a hosting technology that integrates resources, such as hardware, software, and a network, to implement data computing, storage, processing, and sharing in a wide area network or a local area network. The cloud technology can be applied to various fields, such as a medical cloud, cloud internet of things, cloud security, cloud education, a cloud conference, an artificial intelligence cloud service, a cloud application, a cloud call, and cloud-based social networking. The cloud technology is based on a business mode application of cloud computing, and distributes computing tasks to a resource pool including a large quantity of computers, so that various application systems can obtain computing power, storage space, and information services as required. A network that provides resources is referred to as a "cloud". For a user, the resources in the "cloud" seem to be infinitely expandable, and may be obtained readily, used on demand, expanded readily, and paid for use. As a provider of basic capabilities of cloud computing, a cloud computing resource pool (a cloud platform for short, generally referred to as infrastructure as a service (IaaS)) is established. A plurality of types of virtual resources are deployed in the resource pool for an external customer to choose and use. The cloud computing resource pool mainly includes: a computing device (which is a virtualized machine, and includes an operating system), a storage device, and a network device.

According to logical function division, a platform as a service (PaaS) layer may be deployed on an IaaS layer, and a software as a service (SaaS) layer may be deployed on the PaaS layer, or SaaS may be directly deployed on IaaS. PaaS is a platform on which software runs, such as a database and a web container. SaaS is a variety of service software, such as a web portal and a bulk short message service sender. Generally, SaaS and PaaS are upper layers relative to IaaS.

Specifically, the server 02 involved above may include a physical device, which may specifically include a network communication sub-module, a processor, a memory, and the like; or may include software running in a physical device, which may specifically include an application, and the like.

Specifically, the terminal 01 may include physical devices of types such as a smartphone, a desktop computer, a tablet computer, a notebook computer, a digital assistant, an augmented reality (AR)/virtual reality (VR) device, a smart voice interaction device, a smart household appliance, a smart wearable device, and an in-vehicle terminal device, or may include software, for example, an application, running in a physical device.

In this embodiment of the present disclosure, the terminal 01 may be configured to generate a facial recognition payment request in response to a trigger operation related to facial recognition payment submitted by a target object, and further collect image data and audio data, to perform feature analysis on the audio data for the number of objects, to obtain an audio analysis result. The object herein may be a user, a smart robot, or the like, and the number of objects may be the number of objects included in the audio data. For the feature analysis performed on the audio data for the number of objects, feature analysis may be performed on the audio data, to analyze the number of objects included in the audio data. The obtained audio analysis result is also a result that can reflect the number of objects. Based on the number of objects corresponding to the audio data indicated by the audio analysis result, whether to trigger and load a face detection model (the face detection model herein may be a model configured to detect faces of a plurality of objects, and may also be referred to as a multi-person detection model) may be determined to perform face detection and target facial image selection of the target object, and a related service payment request may be transmitted to the server 02 based on finally obtained target facial data, so that the server 02 performs a corresponding payment processing/payment operation in response to the service payment request. The server 02 provides a payment function, and provides a data storage function, for example, stores the facial data by using an SQLite database, for payment comparison and matching.

In addition, FIG. 1 shows only an application environment of a payment processing method based on facial recognition, and the application environment may include more or fewer nodes. This is not limited in the present disclosure herein.

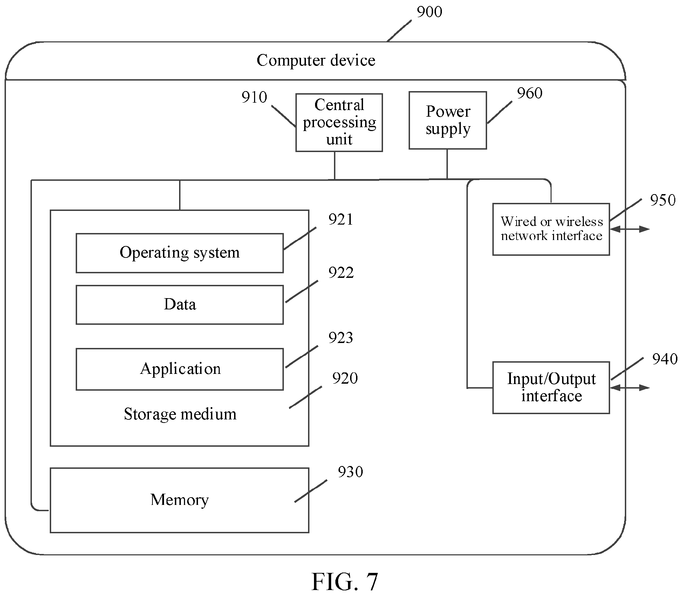

The application environment involved in this embodiment of the present disclosure, or the terminal 01, the server 02, and the like in the application environment may be a distributed system formed by connecting a client and a plurality of nodes (computing devices in any form in an access network, such as the server and the terminal) through network communication. The distributed system may be a block chain system. The block chain system may provide the foregoing payment processing function, model training function, data storage function, and the like based on facial recognition. In an embodiment, the application environment can run a conversational system. The conversational system may store basic corpus information, and include a character setting component, a question and answer (QA) component, an expression processing component, and a reply generation component (referring to FIG. 7).

The following describes the technical solutions of the present disclosure based on the foregoing application environment and conversational system. The embodiments of the present disclosure may be applied to various scenarios, including, but not limited to, the cloud technology, the artificial intelligence, intelligent traffic, assisted driving, and the like. Refer to FIG. 2. FIG. 2 is a schematic flowchart of a payment processing method based on facial recognition according to an embodiment of the present disclosure. This specification provides method operation steps according to the embodiments or flowcharts, but may include more or fewer operation steps based on routine or no creative efforts. The order of the steps set forth in the embodiments is merely a way of many step performing orders and does not represent the only order of performing the steps. When an actual system or server product performs the steps, the steps may be performed according to the method order shown in the embodiments or the accompanying drawings or may be performed in parallel (for example, by a parallel processor or in a multi-thread processing environment). Specifically, as shown in FIG. 2, the following operations S201 to S207 may be included.

S201: Obtain, in response to the facial recognition payment request from the target object, image data collected by an image collection device and audio data corresponding to the image data.

Specifically, a display screen, the image collection device, and an audio collection device may be disposed on the terminal 01. The display screen may be configured to display a face capturing box, and the like, to display operation information and an interface related to payment to the target object (the target object in the present disclosure may refer to any object). A field of view of the image collection device is located in front of the display screen and is configured to collect image data right in front of the display screen, for payment processing based on facial recognition. A plurality of audio collection devices may be provided. For example, the plurality of audio collection devices may be arranged in an array, for audio data collection and corresponding sound source positioning.

In some embodiments, to enhance facial recognition accuracy and security of an object, the image collection device may include a 3D camera. In addition to a color image (for example, a red-green-blue (RGB) image), the collected image data includes an image including depth information, such as a depth map, and may further include an infrared image, or the like.

In this embodiment of the present disclosure, the terminal may run a facial recognition application, which may specifically include a facial payment component, an algorithm assistant component, and an algorithm scheduler component. The facial payment component is configured for facial collection and image selection. The algorithm assistant component runs a face detection component, an attention detection component, and the like, to implement multi-object face detection. The algorithm scheduler component is configured to perform facial recognition on an obtained facial image of the target object, to obtain facial data for payment processing. The facial collection refers to invoking the image collection device to perform image collection. The image collection device obtains image stream data such as an RGB image stream, a depth image stream, and an infrared image stream. The image selection is configured for selecting image data for subsequent facial recognition from the image stream data. Specifically, comprehensive evaluation may be performed based on parameter indicators such as a facial area size, a facial angle, image contrast, and image brightness and definition, to determine optimal image data including the facial image. In an existing facial recognition payment solution, a multi-object face detection component and the attention detection component are introduced before an image selection phase and a subsequent facial recognition phase. Whether facial image areas of a plurality of objects exist in a current image is determined through a multi-object face detection algorithm and with reference to an attention detection mechanism. In an actual scenario, there is a single-object payment scenario, that is, there are no faces of the plurality of objects in front of the terminal. The multi-object face detection component and the attention detection component are still loaded by using the foregoing existing solution. The algorithms for the multi-object face detection component and the attention detection component have a large quantity of parameters, the model occupies high memory, and loading and detection are time-consuming. Redundant occupation of the resources is caused, and facial payment experience is affected. The facial payment component in the present disclosure further runs a quantity detection component for the number of objects, which is configured to detect the number of objects in front of the terminal.

There may be a plurality of objects in front of the terminal. The target object refers to an object initiating facial payment on the current terminal. The facial recognition payment request refers to a request generated by the terminal based on a trigger operation of facial payment of the target object. The request is configured for requesting to perform payment through facial recognition. In other words, the facial recognition payment refers to a process of recognizing a face and determining whether to perform payment based on a recognition result. The trigger operation of the facial payment may include, but is not limited to, voice instruction triggering, key submission, and the like.

Specifically, the audio data may be mixed audio collected by the audio collection device, which includes a sound signal in an ambient environment of the terminal. The audio data corresponding to the image data refers to an audio stream matching image collection time of the image data, that is, an audio that includes the image collection time and whose time difference between audio collection time and the image collection time is within a preset time difference range.

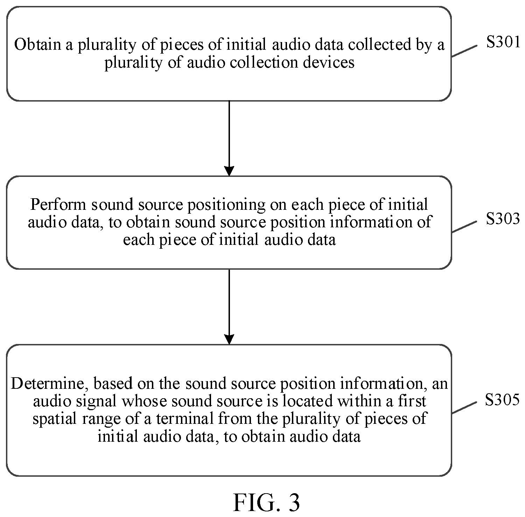

In some embodiments, a plurality of audio collection devices arranged in an array are disposed on the terminal. For example, a microphone array, preferably a linear microphone array, is used, and a plurality of microphones are arranged on a straight line at specific intervals. Correspondingly, refer to FIG. 3. S201 may include S301 to S305.

S301: Obtain a plurality of pieces of initial audio data collected by the plurality of audio collection devices.

S303: Perform sound source positioning on each piece of initial audio data, to obtain sound source position information of each piece of initial audio data.

S305: Determine, from the plurality of pieces of initial audio data based on the sound source position information, an audio signal whose sound source is located within a first spatial range of the terminal, to obtain the audio data.

Specifically, each piece of initial audio data is data obtained by pre-processing an original audio collected by the audio collection device. The pre-processing may include, but is not limited to, filtering, denoising, gain control, and the like. The sound source positioning refers to a technology of determining a sound source position by analyzing a propagation characteristic of a sound wave and a received audio signal. The plurality of audio collection devices (for example, the microphones) may be distributed at different spatial positions, and the received audio signals have different delays and amplitude differences. The sound source positions of the received audio signals can be calculated based on the delays and amplitude differences between the audio signals. The sound source position information herein is configured for representing a relative position between a sound source of the initial audio data and the audio collection device, and is configured for determining an orientation of the sound source of the initial audio data relative to the terminal.

Specifically, each piece of initial audio data obtained through pre-processing is processed by using a sound source positioning algorithm, to determine a sound source position of each piece of initial audio data, to obtain sound source position information. The used sound source positioning algorithm may include, but is not limited to, a beamforming algorithm, a covariance matching algorithm, a least squares method, and the like. This is not specifically limited herein. Further, a sound source position tracking algorithm may be used to perform sound source tracking, to maintain detection of a position relationship between the audio collection device and the sound source. The sound source position tracking algorithm may include, but is not limited to, a Kalman filter, a particle filter, an extended Kalman filter, and the like. This is not specifically limited herein.

Specifically, the first spatial range is located in front of the display screen of the terminal and is located within a field of view (the field of view herein may refer to a range that can be photographed and collected by the image collection device) of the image collection device. In other words, the first spatial range is limited to using only the initial audio data generated by the sound source right in front of the display screen (or the image collection device). The image collection device faces directly in front of the display screen of the terminal. Through the foregoing solution, the audio data from directly in front of the terminal is accurately selected, to reduce stray sound source interference, reduce difficulty in sound source separation, and improve efficiency of subsequent object number quantification.

In some embodiments, the audio data may be directly selected by using the sound source position information, and a sound source direction corresponding to the sound source position information may be matched with a camera direction, to determine an angle difference between the sound source direction and the camera direction. The audio data may be selected through the angle difference. For example: If an angle difference of a piece of sound source position information is less than a specific angle threshold (the angle threshold may be specifically set based on an actual service requirement), it may be considered that the sound source is located right in front of the image collection device, that is, the display screen. It can be determined that an audio signal corresponding to the sound source is within the first spatial range, and the audio signal may be determined as the audio data in the present disclosure. Otherwise, it may be determined that the audio signal is not within the first spatial range, and the audio signal may be discarded. In some other embodiments, sound source separation may be performed on the plurality of pieces of initial audio data by using the sound source separation in combination with the foregoing sound source position information, to separate the sound signal from the front and obtain the audio data. The used sound source separation algorithm may be, but is not limited to, blind source separation, non-blind source separation, separation based on a sound source separation model, and the like.

S203: Perform feature analysis on the audio data, to obtain the audio analysis result about the number of objects.

Specifically, the audio analysis result is configured for representing a sound source indicator feature of the audio data, which may include, but is not limited to, at least one of sound source separation data and noise indicator data. The number of objects refers to the number of objects to which sound sources forming the audio data belong, that is, the number of objects emitting the sound sources to form the audio data.

Specifically, the feature analysis is analyzing an audio energy feature of the audio data, to obtain an audio analysis result. The audio analysis result is a result configured for reflecting the number of objects of the audio data, which may include a first result and a second result. The first result may be configured for indicating that there is one object of the audio data, and the second result may be configured for representing that there are a plurality of objects of the audio data (a plurality of usually refers to two or more). The audio energy feature is configured for representing energy of each frame of audio data in a time domain, that is, configured for describing a feature of the audio energy, which includes, but is not limited to, short-time energy, a short-time average amplitude, a short-time power spectrum, and the like.

In some embodiments, S203 includes S401: Perform sound source separation detection on the audio data, to obtain the sound source separation data.

Specifically, the sound source separation detection refers to separating different sound sources in the audio data to separate different sound source signals from one piece of audio data. Correspondingly, the sound source separation data includes at least one sound source signal corresponding to the audio data. If there is only one sound source signal, it indicates that the current audio data is from the same object, and a scenario from which the audio data is transmitted is a single-object scenario. If there are more than one (at least two) sound source signals, it may be determined that the audio data is from a plurality of objects, representing that a multi-sound-source multi-object scenario is hit.

In some cases, when the sound source separation is used to separate the sound signal directly in front to obtain the audio data in S305, the result obtained through the sound source separation in S305 may be reused as the sound source separation data in S401, thereby reducing data processing. In some other cases, no sound source separation is used in S305, and the sound source separation algorithm used for the sound source separation detection in S401 may include blind source separation, non-blind source separation, separation based on a sound source separation model, and the like. The sound source separation data is obtained by performing sound source separation on the audio energy feature. The audio energy feature is obtained by performing framing on the audio data, to obtain a plurality of audio frames, and performing energy feature extraction on the plurality of audio frames.

Correspondingly, in an embodiment, S401 includes: performing framing on the audio data, to obtain a plurality of audio frames; and performing energy feature extraction on the plurality of audio frames to obtain an audio energy feature, that is, obtain an energy feature of each audio frame, such as short-time energy, a short-time average amplitude, and a short-time power spectrum. Further, sound source separation may be performed on the audio energy feature based on the sound source separation model, to obtain the sound source separation data. In this way, by performing sound source separation through an intelligent model, accuracy of sound source separation may be improved.

Specifically, the sound source separation model involved above is obtained by performing constrained training for sound source separation on a preset first deep neural network using a sample audio energy feature as an input and using a sample sound source signal corresponding to the sample audio energy feature as an expected output, and the sample audio energy feature is obtained by performing energy feature extraction based on audio data of one sample sound source or mixed audio data corresponding to at least two sample sound sources. The audio data of the sample sound source may be a human sound audio. The mixed audio data may refer to an audio including a plurality of human sounds. The sample sound source signal, as a training label, refers to a sound signal transmitted by a single sample sound source, and is configured for performing optimization training on a preset deep neural network (for example, the first deep neural network). The sample audio energy feature herein is similar to the foregoing obtaining manner of the audio energy feature, and details are not described herein again.

In an embodiment, an audio data set including the plurality of human sounds is obtained, voices of different human sounds are individually separated as the audio data of the sample sound source, and then the audio data of the sample sound source is transformed into a feature vector that can be processed by a computer. The method used includes, but is not limited to, short-time Fourier transform (STFT), Mel-frequency cepstral coefficients (MFCC), an energy feature algorithm, or the like. An initial model is constructed by using the preset deep neural network (such as a convolutional neural network (CNN)), and then the initial model is trained. During training, optimization may be performed by using an optimizer such as Adam or SGD, a learning rate is set based on a requirement, and loss calculation is performed by using an existing loss function, such as cross entropy. Feature processing is performed on audio data that needs to be separated, and then the audio data is inputted into a trained sound source separation model, to output sound source signals of different human sounds predicted by the model. When the audio data is long, the long audio data may be processed through a sliding window.

Correspondingly, after the at least one sound source signal corresponding to the audio data is obtained, the audio analysis result may be determined based on the at least one sound source signal. A specific implementation process thereof may include at least operation S501 to operation S503 below.

S501: Count a total number of sound source signals included in the at least one sound source signal.

S502: Determine that the audio analysis result is the first result if the total signal number is equal to a unit value, the first result indicating that one object corresponds to the audio data, that is, the number of objects corresponding to the audio data is one

Specifically, the unit value may be a value 1. If the total signal number is equal to the unit value, it may indicate that the sound source separation data includes one sound source signal. In this case, it may be determined that the audio analysis result is the first result. To be specific, one object corresponds to the audio data.

S503: Determine that the audio analysis result is the second result if the total signal number is greater than the unit value, the second result indicating that a plurality of objects correspond to the audio data, that is the number of objects corresponding to the audio data is more than one.

Specifically, if the total signal number is greater than the unit value, it may indicate that the sound source separation data includes at least two sound source signals. In this case, it may be determined that the audio analysis result is the second result. To be specific, a plurality of objects correspond to the audio data.

In this way, the intelligent model is used to analyze the energy feature, to model and separate sound features of different objects, the audio data is divided into different sound sources, and a quantity of different sound source signals obtained through separation is a quantity of different objects, thereby obtaining the number of objects. When the quantity of objects is more than one, it represents that a plurality of objects may exist around, and in this case, a related service component such as a multi-object face detection module may be loaded, to detect a plurality of facial images. When the number of objects is equal to one, a facial recognition model may be directly invoked to perform facial recognition and payment processing on the facial data of the target object without invoking the related service component such as the multi-object face detection module, to improve payment efficiency.

In some other embodiments, S203 includes S403 to S405.

S403: Determine a noise signal in the audio data.

S405: Perform noise field amplitude calculation on the noise signal to obtain noise indicator data, the noise indicator data being configured for indicating environmental noise intensity corresponding to the audio data. For example, the noise indicator data may be a noise decibel value.

Specifically, the noise signal is a noise audio separated from the audio data, and an obtaining manner of the noise signal may specifically include, but is not limited to: performing framing on the audio data, to obtain a plurality of audio frames; and performing energy feature extraction on the plurality of audio frames after obtaining the plurality of audio frames, to obtain an audio energy feature. Further, noise estimation may be performed on the obtained audio energy feature based on a noise estimation model. In this way, the noise signal may be obtained. The audio frames and the audio energy features in the noise signal obtaining process and the sound source separation process may be reused as each other.

Specifically, the noise estimation model is obtained by performing constrained training for noise estimation on a preset second deep neural network using a sample audio energy feature as an input and using a sample noise signal corresponding to the sample audio energy feature as an expected output, and the sample audio energy feature is obtained by performing energy feature extraction based on audio data of one sample sound source or mixed audio data corresponding to at least two sample sound sources.

The sample noise signal is equivalent to a training label and is configured for implementing model training. The sample audio energy feature, the audio data of the sample sound source, and the mixed audio data herein may be used as training data shared with the sound source separation model, or may be independently set training data. The second deep neural network may be, for example, a convolutional neural network. In this way, the noise signal is generated through the intelligent model, to help determine an environment noise level, thereby improving accuracy of determining a multi-person scenario.

The extracted feature is analyzed through the noise estimation model, to obtain an energy distribution feature of a noise, such as average energy and peak energy, to estimate the noise, thereby generating the noise signal. Specifically, the noise field amplitude calculation refers to calculating a noise field decibel value of the noise signal by using a noise intensity algorithm.

Correspondingly, after the noise indicator data is calculated, the audio analysis result of the audio data may be determined based on the environmental noise intensity that is indicated by the noise indicator data and that corresponds to the audio data. A specific implementation process thereof may include at least operation S505 and operation S507 below.

S505: Determine that the audio analysis result is the first result if the noise indicator data indicates that the environmental noise intensity corresponding to the audio data is less than a preset intensity threshold, the first result being configured for indicating that one object corresponds to the audio data.

S507: Determine that the audio analysis result is the second result if the noise indicator data indicates that the environmental noise intensity corresponding to the audio data is higher than the preset intensity threshold, the second result being configured for indicating that the number of objects corresponding to the audio data is more than one.

When the number of objects around the terminal is excessively large, high-decibel noise may cause inaccurate sound separation. Therefore, the present disclosure introduces noise signal detection and noise intensity indicator calculation as separate determining logic. If the decibel value exceeds the preset intensity threshold (the threshold may be specifically set based on an actual service requirement), it may be determined that the noise field decibel value is unqualified, which represents that a plurality of objects may exist around. In this case, the multi-object face detection component needs to be loaded. If the decibel value is less than the preset intensity threshold, the scenario may be determined as a single-object scenario. In this case, the multi-object face detection component does not need to be loaded. In this way, determining accuracy of the multi-object scenario and the single-object scenario may be improved through noise detection.

In some embodiments, sound source separation detection and noise field amplitude calculation of the noise signal may be performed in parallel. After the audio data is obtained, sound source separation detection, noise signal estimation, and corresponding noise amplitude calculation may be separately performed on the audio data, thereby separately obtaining a sound source separation result and noise indicator data. In some cases, if any of the sound source separation result and the noise indicator data indicates that there are a plurality of objects, performing of S209 may be triggered. If both the sound source separation result and the noise indicator data indicate that there is one object, performing of S205 may be triggered. In some other cases, if any of the sound source separation result and the noise indicator data indicates that there is one object, performing of S205 may be triggered. If both the sound source separation result and the noise indicator data indicate that there are a plurality of objects, performing of S209 may be triggered. In this way, through parallel detection, with two manners helping each other, accurate determining of the multi-person scenario and the single-person scenario can be implemented.

In some other embodiments, after the audio data is obtained, sound source separation detection may be first performed. If the sound source separation data includes more than one sound source signal, it may be determined that the audio analysis result indicates that the number of objects corresponding to the audio data is more than one, and performing of S209 may be triggered. If the sound source separation data includes one sound source signal, noise signal estimation and noise field amplitude calculation may be performed on the audio data. If the noise indicator data indicates that the environmental noise intensity corresponding to the audio data is less than the preset intensity threshold, it may be determined that the audio analysis result indicates that the number of objects corresponding to the audio data is one, and performing of S205 may be triggered. If the noise indicator data indicates that the environmental noise intensity corresponding to the audio data is higher than the preset intensity threshold, it may be determined that the audio analysis result indicates that a plurality of objects correspond to the audio data, and performing of S209 may be triggered. In this way, by selectively triggering noise detection, resource occupation for object quantity detection can be reduced while ensuring detection accuracy.

In some other embodiments, after the audio data is obtained, noise signal estimation and noise field amplitude calculation may be first performed. If the noise indicator data indicates that the environmental noise intensity corresponding to the audio data is higher than the preset intensity threshold, it may be determined that the audio analysis result indicates that a plurality of objects correspond to the audio data, and performing of S209 may be triggered. If the noise indicator data indicates that the environmental noise intensity corresponding to the audio data is less than the preset intensity threshold, it may be determined that the audio analysis result indicates that the scenario is the single-object scenario. Further, the sound source separation data of the audio data may be obtained. If the sound source separation data includes one sound source signal, it may be determined that the audio analysis result indicates that one object corresponds to the audio data, and performing of S205 may be triggered. If the sound source separation data includes more than one sound source signal, it may be determined that the audio analysis result indicates that a plurality of objects correspond to the audio data, and performing of S209 may be triggered. In this way, by selectively triggering sound source separation detection, resource occupation for object quantity detection can be reduced while ensuring detection accuracy.

The audio energy feature is used in both noise signal estimation and sound source separation detection. Therefore, in the foregoing various solutions, framing and energy feature extraction are performed only once, that is, framing is first performed to obtain a plurality of audio frames, energy feature extraction is then performed on the plurality of audio frames to obtain an audio energy feature, and the audio energy feature is configured for noise signal estimation and sound source separation.

This solution is based on noise detection and sound source detection, with pre-detection and determining of complexity of objects included in the current scenario. If there is no excessive noise or related human sound dialog in the scenario, the scenario is highly likely to be a single-object payment scenario. In this case, facial recognition may be directly performed through the algorithm, and a related capability of multi-object face detection does not need to be loaded. If there is excessive noise or redundant human sound dialog, the multi-object face detection component is loaded, to improve payment efficiency and reduce resource loss.

S205: Perform facial recognition on the image data based on the facial recognition model, to obtain target facial data of the target object if the audio analysis result indicates that one object corresponds to the audio data.

In some embodiments, if a result obtained based on the noise signal detection is that one object corresponds to the audio data or a result obtained based on the sound source separation detection is a single object, it may be determined that the audio analysis result indicates that one object corresponds to the audio data, so that the algorithm scheduler component may directly invoke the facial recognition model to perform facial recognition, to obtain the target facial data without loading the multi-object face detection component, the corresponding attention detection component, and the like. The target facial data may be a feature vector representing a facial image area of the target object, which is object-specific. The facial recognition model may be constructed by using an existing recognition model and trained by using facial recognition training data. This is not limited herein. If the result obtained based on the noise signal detection is more than one person and the result obtained based on the sound source separation detection is more than one person, it may be determined that the audio analysis result indicates that a plurality of objects correspond to the audio data, and in this case, a multi-object face detection algorithm may be correspondingly invoked to perform multi-object face detection.

In some other embodiments, if both the results obtained based on the noise signal detection and the sound source separation detection represent that there is one object, it may be determined that the audio analysis result indicates that one object corresponds to the audio data, that is, it is clear that the current payment scenario is the single-object payment scenario, so that facial recognition may be directly performed without loading the multi-object face detection component, the corresponding attention detection component, and the like. If the result obtained based on the noise signal detection is more than one person or the result obtained based on the sound source separation detection is more than one person, it may be determined that the audio analysis result indicates that the number of objects corresponding to the audio data is more than one. A multi-object face detection algorithm may be correspondingly invoked to perform multi-object face detection. In this way, exclusive OR (XOR) determining of noise and sound source separation can be implemented, accuracy of recognition of the single-object payment scenario can be improved, and a missed detection rate of the multi-object payment scenario can be reduced.

S207: Perform a payment operation corresponding to the facial recognition payment request based on the target facial data.

The facial recognition model may be run on the terminal, so that the terminal transmits the obtained target facial data to the server to perform a facial data matching operation, to implement the payment operation. Alternatively, the facial recognition model is run on the server. After determining the single-object payment scenario, the terminal may transmit the selected image data to the server, to input the selected image data to the facial recognition model and output the target facial data, to perform facial data matching, thereby implementing the payment operation.

Based on the foregoing technical solutions, in the present disclosure, before the multi-object face detection module is loaded, feature analysis may be first performed based on the audio data, to obtain the audio analysis result that can indicate the number of objects in front of the current terminal. When the audio analysis result indicates that the current environment is the single-object payment scenario, facial recognition may be directly performed without triggering loading of related memory-intensive service components such as multi-object face detection, thereby optimizing load time consumed during facial payment, improving payment efficiency, and improving product experience.

Specifically, after receiving the image data uploaded by the terminal, the facial recognition component may perform feature extraction on the current image data, to obtain the target facial data, compare the target facial data with a feature stored in a database, match feature data having the highest score, and compare the feature data having the highest score with facial data in a backend database, to determine whether the payment request from the target object complies with regulations and corresponding payment information, and perform payment if the payment request from the target object complies with the regulations. For example, after determining that the payment request from the target object complies with the regulations, a downstream server returns final payment account information or payment code information of the target object, for payment interaction verification.

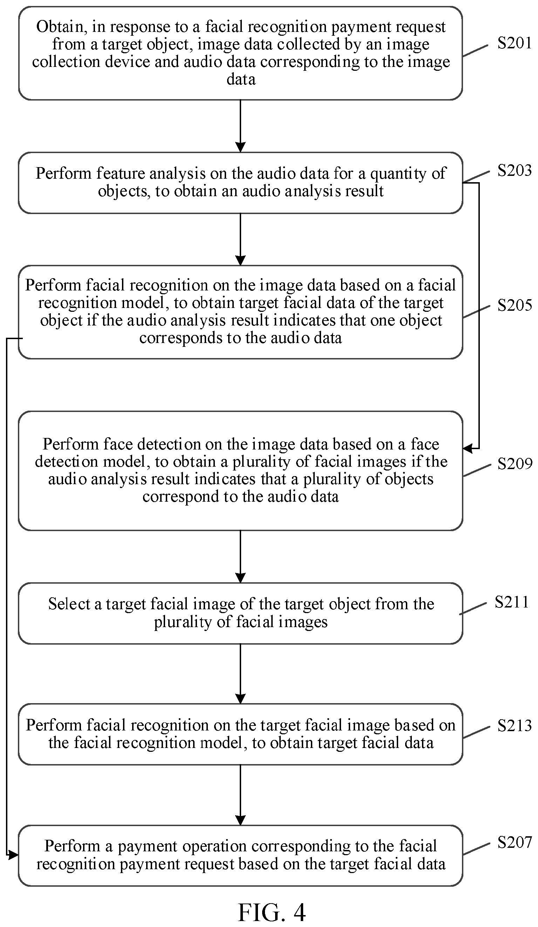

Based on some or all of the foregoing implementations, in this embodiment of the present disclosure, refer to FIG. 4. The method further includes S209 to S213.

S209: Perform face detection on the image data based on the face detection model to obtain the plurality of facial images if the audio analysis result indicates that a plurality of objects correspond to the audio data.

S211: Select the target facial image of the target object from the plurality of facial images.

S213: Perform facial recognition on the target facial image based on the facial recognition model, to obtain the target facial data.

The face detection model may be a face detection model for a plurality of objects, may use an existing detection model, and may be obtained by constructing based on the deep neural network and performing image detection training by using a multi-object facial image. The face detection module may be run on the terminal, and the plurality of facial images are directly obtained from the terminal. Alternatively, the face detection module may be run on the server. The terminal transmits the image data to the server, the image data carrying multi-object detection trigger information, so that the server invokes a multi-object detection model to perform face detection on the image data. After the plurality of facial images are obtained, image selection of the target object needs to be performed, and the selection process may be operated on the terminal, or may be implemented by the server. In this way, detection of the multi-object payment scenario is implemented through object quantity prediction, the multi-object face detection model is loaded if it is determined that the plurality of objects exist, and the target facial image that currently needs to be recognized is obtained through face selection, thereby improving overall payment efficiency and ensuring payment security.

In some cases, facial image selection may be performed based on information such as an image area size and an image area position that are corresponding to the plurality of facial images in the image data. A larger image area size and a closer image area position to an image center indicate a higher probability that the image data is the target facial data. The information such as the image area size and the image area position may be scored in a voting-based scoring manner, and then scores may be added, to determine a facial image having the highest score as the target facial image.

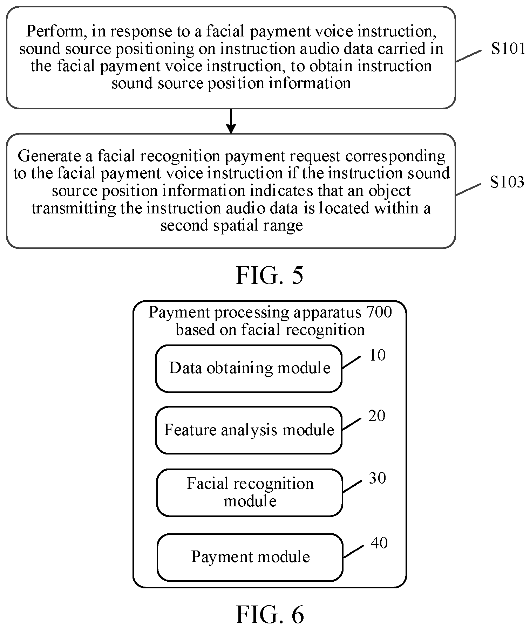

Based on some or all of the foregoing implementations, in some embodiments, a facial payment scenario may be combined with a voice instruction, that is, the facial recognition payment request may be triggered through the voice instruction. Correspondingly, refer to FIG. 5. Before S201, the method further includes S101 to S103.

S101: Perform, in response to a facial payment voice instruction, sound source positioning on instruction audio data carried in the facial payment voice instruction, to obtain instruction sound source position information.

S103: Generate a facial recognition payment request corresponding to the facial payment voice instruction if the instruction sound source position information indicates that an object transmitting the instruction audio data is located in a second spatial range.

Specifically, after collecting original audio data and obtaining initial audio data, the audio collection device of the terminal may perform voice recognition on the initial audio data. If a voice recognition result indicates that a voice text corresponding to the initial audio data hits the facial payment voice instruction, such as "facial recognition payment", a position of an audio signal corresponding to the voice text in the initial audio data is positioned through a sound source positioning algorithm, to obtain the instruction sound source position information. An instruction sound source position indicates a relative position of the object transmitting the instruction audio data relative to the image collection device. Further, based on position information of the image collection device, position information of the display screen, and the instruction sound source position information, a relative position of the object transmitting the instruction audio data relative to the display screen is determined. If the determined relative position is located within the second spatial range, it is determined that the instruction sound source position information indicates that the object transmitting the instruction audio data is located in the second spatial range. If the determined relative position is not located within the second spatial range, it is determined that the instruction sound source position information indicates that the position of the object transmitting the instruction audio data exceeds the second spatial range. The sound source positioning algorithm herein may be similar to the sound source positioning described above, and details are not described herein again.

If the instruction sound source position information indicates that the object transmitting the instruction audio data is located within the second spatial range, the object is determined as a target object for initiating a facial payment operation of the current terminal, to generate a facial recognition payment request, the second spatial range being located in front of the display screen of the terminal and a distance from the display screen being within a preset distance range. If the instruction sound source position information indicates that the object transmitting the instruction audio data exceeds the second spatial range, it indicates that the object transmitting the instruction audio data is not the target object, the facial recognition payment request is not generated, and a sound signal around the terminal is continuously collected. In this way, voice instruction crosstalk for other terminals is avoided in a case of a plurality of payment terminals, and voice trigger accuracy is improved.

Correspondingly, in a scenario in which the voice instruction triggers the facial payment operation, if it is determined, based on the foregoing audio analysis result, that there are a plurality of objects currently, the selecting the target facial image of the target object from the plurality of facial images in S211 includes:
S601: Obtain facial position information respectively corresponding to the plurality of facial images.
S603: Determine a facial image in the plurality of facial images whose facial position information matches the instruction sound source position information as the target facial image.

Specifically, the facial position information is configured for representing a position of an object to which the facial image belongs relative to the image collection device, and may be obtained by calculating the relative position between the object and the image collection device based on the image area position of the facial image in the image data and camera parameters for collecting the image data. The image area position may be obtained based on the face detection in S209.

Further, facial position information in each facial image is compared with the instruction sound source position information, and a facial image whose position is closest to the image center is determined as the target facial image. In this way, the target facial image is determined with reference to a positioning result of the voice instruction, thereby improving target determining efficiency in the multi-object payment scenario.

In some embodiments, to avoid a comparison error caused by a position change of the target object during a time interval between transmitting the voice instruction and performing multi-object face detection, after determining that the facial recognition payment request is generated, the terminal generates a notification sound for recording a voice signal again, for example, "repeat a facial payment instruction", to prompt the target object to input the voice instruction again, to perform sound source separation on the voice instruction, to update the instruction sound source position information as comparison data of the facial position information, thereby improving position comparison accuracy.

In the present disclosure, the audio collection device is built in the payment terminal device. A sound source right in front of the device is continuously collected in a silent mode, and timbre and noise determining is performed on the sound source. If multi-timbre or high noise is hit, when facial recognition payment is started, a multi-person detection module and an attention determining module are additionally loaded. If the multi-timbre or high noise is not hit, the multi-person detection module and the attention determining module are not loaded, time consumption caused by an algorithm load is optimized, and service experience is improved.

An embodiment of the present disclosure further provides a payment processing apparatus 700 based on facial recognition, disposed on a terminal. As shown in FIG. 6, FIG. 6 is a schematic structural diagram of a payment processing apparatus based on facial recognition according to an embodiment of the present disclosure. The apparatus may include the following modules:
a data obtaining module 10, configured to obtain, in response to a facial recognition payment request from a target object, image data collected by an image collection device and audio data corresponding to the image data;
a feature analysis module 20, configured to perform feature analysis on the audio data, to obtain an audio analysis result about the number of objects;
a facial recognition module 30, configured to perform facial recognition on the image data based on a facial recognition model corresponding to a single-person scenario, to obtain target facial data of the target object if the audio analysis result indicates that one object corresponds to the audio data; and
a payment module 40, configured to perform a payment operation corresponding to the facial recognition payment request based on the target facial data.

In some embodiments, the feature analysis module 20 includes a sound source separation sub-module, configured to: perform sound source separation detection on the audio data to obtain sound source separation data, the sound source separation data including at least one sound source signal corresponding to the audio data;
count a total number of sound source signals included in the at least one sound source signal; and
determine that the audio analysis result is a first result if the total signal number is equal to a unit value, the first result indicating that one object corresponds to the audio data; or
determine that the audio analysis result is a second result if the total signal number is greater than the unit value, the second result indicating that a plurality of objects correspond to the audio data.

In some embodiments, the sound source separation sub-module includes:
a framing unit, configured to perform framing on the audio data, to obtain a plurality of audio frames;
a feature extraction unit, configured to perform energy feature extraction on the plurality of audio frames, to obtain an audio energy feature; and
a sound source separation unit, configured to perform sound source separation on the audio energy feature based on a sound source separation model, to obtain the sound source separation data, the sound source separation model being obtained by performing constrained training for sound source separation on a preset first deep neural network using a sample audio energy feature as an input and using a sample sound source signal corresponding to the sample audio energy feature as an expected output, and the sample audio energy feature being obtained by performing energy feature extraction based on audio data of one sample sound source or mixed audio data corresponding to at least two sample sound sources.

In some embodiments, the feature analysis module 20 includes:
a noise determining sub-module, configured to determine a noise signal in the audio data;
an amplitude calculation sub-module, configured to perform noise field amplitude calculation on the noise signal to obtain noise indicator data, the noise indicator data being configured for indicating environmental noise intensity corresponding to the audio data; and
a determining module, configured to: determine that the audio analysis result is the first result if the noise indicator data indicates that the environmental noise intensity corresponding to the audio data is less than a preset intensity threshold, the first result being configured for indicating that one object corresponds to the audio data; and
determine that the audio analysis result is the second result if the noise indicator data indicates that the environmental noise intensity corresponding to the audio data is higher than the preset intensity threshold, the second result being configured for indicating that a plurality of objects correspond to the audio data.

In some embodiments, the noise determining sub-module includes:
the framing unit, configured to perform framing on the audio data, to obtain a plurality of audio frames;
the feature extraction unit, configured to perform energy feature extraction on the plurality of audio frames, to obtain an audio energy feature; and
a noise estimation unit, configured to perform noise estimation on the audio energy feature based on a noise estimation model, to obtain the noise signal, the noise estimation model being obtained by performing constrained training for noise estimation on a preset second deep neural network using a sample audio energy feature as an input and using a sample noise signal corresponding to the sample audio energy feature as an expected output, and the sample audio energy feature being obtained by performing energy feature extraction based on audio data of one sample sound source or mixed audio data corresponding to at least two sample sound sources.

In some embodiments, a plurality of audio collection devices arranged in an array are further disposed on the terminal, and the data obtaining module 10 includes:
an initial audio obtaining sub-module, configured to obtain a plurality of pieces of initial audio data collected by the plurality of audio collection devices;
a sound source positioning sub-module, configured to perform sound source positioning on each piece of initial audio data, to obtain sound source position information of each piece of initial audio data; and
an audio selection sub-module, configured to determine, from the plurality of pieces of initial audio data based on the sound source position information, an audio signal whose sound source is located within a first spatial range of the terminal, to obtain the audio data, the first spatial range being located in front of a display screen of the terminal and located within a field of view of the image collection device.

In some embodiments, the apparatus further includes:
a face detection module, configured to perform face detection on the image data based on a face detection model to obtain a plurality of facial images if the audio analysis result indicates that a plurality of objects correspond to the audio data; and
a face selection module, configured to select a target facial image of the target object from the plurality of facial images,
the facial recognition module being further configured to perform facial recognition on the target facial image based on the facial recognition model, to obtain the target facial data.

In some embodiments, the apparatus further includes:
an instruction sound source positioning module, configured to: before the in response to a facial recognition payment request from a target object, perform, in response to a facial payment voice instruction, sound source positioning on instruction audio data carried in the facial payment voice instruction, to obtain instruction sound source position information, the instruction sound source position information being configured for indicating a relative position of an object transmitting the instruction audio data relative to the image collection device; and
a payment request generation module, configured to: generate a facial recognition payment request corresponding to the facial payment voice instruction if the instruction sound source position information indicates that the object transmitting the instruction audio data is located within a second spatial range, the second spatial range being located in front of the display screen of the terminal and a distance from the display screen being within a preset distance range.

In some embodiments, the face selection module includes:
a facial position obtaining sub-module, configured to obtain facial position information respectively corresponding to the plurality of facial images, each piece of facial position information being configured for representing a position of an object to which the corresponding facial image belongs relative to the image collection device; and
a facial image matching sub-module, configured to determine a facial image in the plurality of facial images whose facial position information matches the instruction sound source position information as the target facial image.

The foregoing apparatus embodiments and method embodiments are based on the same implementation.

An embodiment of the present disclosure provides a device. The device may be a terminal or a server, including a processor and a memory, the memory storing a computer program, and the computer program being loaded and executed by the processor to implement the payment processing method based on facial recognition according to the foregoing method embodiments.

The memory may be configured to store a software program and module. The processor runs the software program and module stored in the memory, to perform various functional applications and abnormality detection. The memory may mainly include a program storage area and a data storage area. The program storage area may store an operating system, an application required by a function, and the like. The data storage area may store data created based on use of the device, and the like. In addition, the memory may include a high-speed random access memory, and may further include a non-volatile memory, for example, at least one disk storage device, a flash memory, or another volatile solid-state storage device. Correspondingly, the memory may further include a memory controller, for the processor to access the memory.

The method embodiment provided in the embodiments of the present disclosure may be performed in computer devices such as a mobile terminal, a computer terminal, a server, or a similar computing apparatus. FIG. 7 is a block diagram of a hardware structure of a computer device for performing a payment processing method based on facial recognition according to an embodiment of the present disclosure. As shown in FIG. 7, the computer device 900 may vary greatly due to different configurations or performance, and may include one or more central processing units (CPUs) 910 (the CPUs 910 may include, but are not limited to, processing apparatuses such as microprocessors MCU or programmable logical devices FPGA), and a memory 930 configured to store data, and one or more storage media 920 (for example, one or more mass storage devices) storing an application 923 or data 922. The memory 930 and the storage medium 920 may be transient or persistent storages. The program stored in the storage medium 920 may include one or more modules, and each module may include a series of instructions and operations to the computer device. Still further, the CPU 910 may be configured to communicate with the storage medium 920, and perform, on the computer device 900, a series of instructions and operations in the storage medium 920. The computer device 900 may further include one or more power supplies 960, one or more wired or wireless network interfaces 950, one or more input/output interfaces 940, and/or one or more operating systems 921, for example, Windows Server^{™}, Mac OS X^{™}, Unix^{™}, Linux^{™}, or FreeBSD^{™}.

The input/output interface 940 may be configured to receive or transmit data through a network. Specific instances of the foregoing network may include a wireless network provided by a communication provider of the computer device 900. In an example, the input/output interface 940 includes a network interface controller (NIC). The NIC may be connected to another network device through a base station, to communicate with the internet. In an example, the input/output interface 940 may be a radio frequency (RF) module, which communicates with the internet in a wireless manner.

A person of ordinary skill in the art may understand that the structure shown in FIG. 7 is only for the purpose of illustration, and does not cause a limitation to the structure of the foregoing electronic apparatus. For example, the computer device 900 may further include more or fewer components than those shown in FIG. 7 or have a configuration different from that shown in FIG. 7.

An embodiment of the present disclosure further provides a computer-readable storage medium. The storage medium may be disposed in a computer device to store a related computer program configured to implement an abnormality detection method in the method embodiments. The computer program is loaded and executed by a processor to implement the abnormality detection method according to the foregoing method embodiments.

In this embodiment, the storage medium may be located in at least one of a plurality of network servers of a computer network. In this embodiment, the storage medium may include, but is not limited to: a universal serial bus flash drive, a read-only memory (ROM), a random access memory (RAM), a mobile hard disk, a magnetic disk, an optical disk, and other media capable of storing program code.

According to an aspect of the present disclosure, a computer program product is provided, including a computer program, the computer program being stored in a computer-readable storage medium. A processor of a computer device reads the computer program from the computer-readable storage medium, and the processor executes the computer program, to cause the computer device to perform the method provided in various exemplary implementations described above.

The payment processing method and apparatus based on facial recognition, device, storage medium, server, terminal, and program product according to the present disclosure have the following technical effects.

After the facial recognition payment request from the target object is received, the image data collected by the image collection device and the audio data corresponding to the image data may be obtained in response to the facial recognition payment request from the target object, and then feature analysis is performed on the audio data for the number of objects, to obtain the audio analysis result. If the audio analysis result indicates that one object corresponds to the audio data, the face detection module does not need to be loaded, and facial recognition may be directly performed on the image data based on the facial recognition model, to obtain the target facial data of the target object, to perform the payment operation corresponding to the facial recognition payment request based on the target facial data. In this way, before the face detection module is loaded, feature analysis is first performed based on the audio data, to obtain the audio analysis result that can indicate the number of objects in front of the current terminal. When the audio analysis result indicates a scenario in which a current environment is a single object, facial recognition is directly performed without triggering loading of related memory-intensive service modules such as multi-object face detection, thereby optimizing load time consumed during facial payment, improving payment efficiency, and improving product experience.

In addition, the sequence of the foregoing embodiments of the present disclosure is merely for description, and does not represent the preference of the embodiments. Moreover, specific embodiments of the present disclosure are described above. Other embodiments are within the scope of the following claims. In some cases, the actions or steps described in the claims may be performed in a sequence different from that in the embodiments, and desired results may still be achieved. In addition, the processes depicted in the accompanying drawings do not necessarily require the specific order shown or the consecutive order to achieve the desired results. In some implementations, multitasking and parallel processing may be feasible or beneficial.

The embodiments of the present disclosure are all described in a progressive manner, for same or similar parts in the embodiments, refer to these embodiments, and descriptions of each embodiment focus on a difference from other embodiments. In particular, the apparatus embodiments, the device embodiments, and the storage medium embodiments are basically similar to the method embodiments, and therefore are described briefly. For related parts, references can be made to partial descriptions in the method embodiments.

A person of ordinary skill in the art may understand that all or some of the steps of the foregoing embodiments may be implemented through hardware, or may be implemented through program instructing relevant hardware. The program may be stored in a computer-readable storage medium. The storage medium mentioned above may be a read-only memory, a magnetic disk, an optical disc, or the like.

The foregoing descriptions are merely exemplary embodiments of the present disclosure, but are not intended to limit the present disclosure. Any modification, equivalent replacement, or improvement made within the spirit and principle of the present disclosure shall fall within the protection scope of the present disclosure.

## Claims

1. A method for payment processing based on facial recognition, executable by a terminal, an image collection device being disposed on the terminal, and the method comprising:
obtaining, in response to a facial recognition payment request from a target object, image data collected by the image collection device and audio data corresponding to the image data;
performing feature analysis on the audio data, to obtain an audio analysis result about a number of objects;
in response to the audio analysis result indicates that the number of objects corresponding to the audio data is one, performing facial recognition on the image data using a facial recognition model, to obtain target facial data of the target object; and
performing a payment operation corresponding to the facial recognition payment request based on the target facial data.

2. The method according to claim 1, wherein the performing feature analysis on the audio data, to obtain an audio analysis result about a number of objects comprises:
performing sound source separation detection on the audio data to obtain sound source separation data, the sound source separation data comprising at least one sound source signal corresponding to the audio data;
counting a total number of sound source signals comprised in the at least one sound source signal; and
determining that the audio analysis result is a first result if the total signal number is equal to a unit value, the first result indicating that the number of objects corresponding to the audio data is one; or
determining that the audio analysis result is a second result if the total signal number is greater than the unit value, the second result indicating that the number of objects corresponding to the audio data is more than one.

3. The method according to claim 1 or 2, wherein the performing sound source separation detection on the audio data to obtain sound source separation data comprises:
performing framing on the audio data, to obtain a plurality of audio frames;
performing energy feature extraction on the plurality of audio frames, to obtain an audio energy feature; and
performing sound source separation on the audio energy feature by using a sound source separation model, to obtain the sound source separation data, the sound source separation model being obtained by performing constrained training for sound source separation on a preset first deep neural network using a sample audio energy feature as an input and using a sample sound source signal corresponding to the sample audio energy feature as an expected output, and the sample audio energy feature being obtained by performing energy feature extraction based on audio data of one sample sound source or mixed audio data corresponding to at least two sample sound sources.

4. The method according to any one of claims 1 to 3, wherein the performing feature analysis on the audio data, to obtain an audio analysis result about a number of objects comprises:
determining a noise signal in the audio data;
performing noise field amplitude calculation on the noise signal to obtain noise indicator data, the noise indicator data being configured for indicating environmental noise intensity corresponding to the audio data;
determining that the audio analysis result is the first result if the noise indicator data indicates that the environmental noise intensity corresponding to the audio data is less than a preset intensity threshold, the first result being configured for indicating that the number of objects corresponding to the audio data is one; and
determining that the audio analysis result is the second result if the noise indicator data indicates that the environmental noise intensity corresponding to the audio data is higher than the preset intensity threshold, the second result being configured for indicating that the number of objects corresponding to the audio data is more than one.

5. The method according to any one of claims 1 to 4, wherein the determining a noise signal in the audio data comprises:
performing framing on the audio data, to obtain a plurality of audio frames;
performing energy feature extraction on the plurality of audio frames, to obtain an audio energy feature; and
performing noise estimation on the audio energy feature by using a noise estimation model, to obtain the noise signal, the noise estimation model being obtained by performing constrained training for noise estimation on a preset second deep neural network using a sample audio energy feature as an input and using a sample noise signal corresponding to the sample audio energy feature as an expected output, and the sample audio energy feature being obtained by performing energy feature extraction based on audio data of one sample sound source or mixed audio data corresponding to at least two sample sound sources.

6. The method according to any one of claims 1 to 5, wherein a plurality of audio collection devices arranged in an array are further disposed on the terminal, and an obtaining manner of the audio data comprises:
obtaining a plurality of pieces of initial audio data collected by the plurality of audio collection devices;
performing sound source positioning on each piece of initial audio data, to obtain sound source position information of each piece of initial audio data; and
determining, from the plurality of pieces of initial audio data based on the sound source position information, an audio signal whose sound source is located within a first spatial range of the terminal, to obtain the audio data, the first spatial range being located in front of a display screen of the terminal and located within a field of view of the image collection device.

7. The method according to any one of claims 1 to 6, further comprising:
performing face detection on the image data by using a face detection model to obtain a plurality of facial images if the audio analysis result indicates that the number of objects corresponding to the audio data is more than one;
selecting a target facial image of the target object from the plurality of facial images; and
performing facial recognition on the target facial image based on the facial recognition model, to obtain the target facial data.

8. The method according to any one of claims 1 to 7, wherein before the in response to a facial recognition payment request from a target object, the method further comprises:
performing, in response to a facial payment voice instruction, sound source positioning on instruction audio data carried in the facial payment voice instruction, to obtain instruction sound source position information, the instruction sound source position information being configured for indicating a relative position of an object transmitting the instruction audio data relative to the image collection device; and
generating a facial recognition payment request corresponding to the facial payment voice instruction if the instruction sound source position information indicates that the object transmitting the instruction audio data is located within a second spatial range, the second spatial range being located in front of the display screen of the terminal and a distance from the display screen being within a preset distance range.

9. The method according to any one of claims 1 to 8, wherein the selecting a target facial image of the target object from the plurality of facial images comprises:
obtaining facial position information respectively corresponding to the plurality of facial images, each piece of facial position information representing a position of an object to which the corresponding facial image belongs relative to the image collection device; and
determining a facial image in the plurality of facial images whose facial position information matches the instruction sound source position information as the target facial image.

10. A device for payment processing based on facial recognition, used in a terminal, an image collection device being disposed on the terminal, and the device comprising:
a data obtaining module configured to obtain, in response to a facial recognition payment request from a target object, image data collected by the image collection device and audio data corresponding to the image data;
a feature analysis module configured to perform feature analysis on the audio data, to obtain an audio analysis result about a number of objects;
a facial recognition module configured to perform facial recognition on the image data using a facial recognition model, to obtain target facial data of the target object in response to the audio analysis result indicates that the number of objects corresponding to the audio data is one; and
a payment module configured to perform a payment operation corresponding to the facial recognition payment request based on the target facial data.

11. A computer-readable storage medium, having a computer program stored therein, the computer program being loaded and executed by a processor, to implement the payment processing method based on facial recognition according to any one of claims 1 to 9.

12. A computer device, comprising a processor and a memory, the memory having a computer program stored therein, and the processor being configured to invoke the computer program, to cause the computer device to perform the method according to any one of claims 1 to 9.
